# EUROPÄISCHE PATENTSCHRIFT

(11) **EP 3 809 564 B1**
(45) Veröffentlichungstag und Bekanntmachung des Hinweises auf die Patenterteilung: **28.08.2024**
(21) Anmeldenummer: 20200326.5
(22) Anmeldetag: 06.10.2020
(51) Int. Cl.: H02K 5/04, H02K 5/16, H02K 11/33, H05K 5/00, H05K 5/02, H05K 5/06

(54) **ANTRIEB**
DRIVE
ENTRAÎNEMENT

(30) Priorität: 15.10.2019 DE 102019215842
(43) Veröffentlichungstag der Anmeldung: 21.04.2021
(73) Patentinhaber: Baumüller Nürnberg GmbH, 90482 Nürnberg (DE)
(72) Erfinder: LUPKOW, Andreas, 91241 Kirchensittenbach (DE)
(74) Vertreter: FDST Patentanwälte

(56) Entgegenhaltungen:
- EP-A1- 2 434 849
- EP-A2- 1 734 640
- CN-A- 105 545 721
- DE-A1- 102007 046 662
- DE-A1- 102017 220 970
- DE-U- 7 008 143
- DE-U1- 202013 006 412
- US-B1- 10 383 253
- US-B2- 9 055 686

## Beschreibung

Die Erfindung betrifft einen Antrieb mit einem Elektromotor sowie einem Umrichter. Bevorzugt ist der Antrieb ein Bestandteil einer Webmaschine und zweckmäßigerweise ein Hilfsantrieb.

Zur Herstellung von gewebten Flächengebilden werden üblicherweise Webmaschinen verwendet. Bei diesen werden mehrere Kettfäden parallel zueinander bewegt, und zwischen diese wird ein Schussfaden eingebracht. Nach Eindringen des Schussfadens werden die Kettfäden senkrecht zu deren Bewegungsrichtung gegeneinander bewegt, und nachfolgend wird erneut der Schussfaden zwischen die Kettfäden eingebracht. Die Kettfäden, zwischen denen sich der Schutzfaden bereits befindet, werden auf eine Trommel aufgerollt. Eine derartige Webmaschine ist eine sogenannte Einphasenwebmaschine.

Zur Erhöhung der Produktionsgeschwindigkeit sind auch mehr Phasenwebmaschinen bekannt. Bei diesen werden die einzelnen Kettfäden auf einen gemeinsamen Rotor eingespannt und dort mit unterschiedlichen Schussfäden durchzogen. Nach Abrollen von dem Rotor werden die mittels der Schussfäden verbundenen Kettfäden ebenfalls auf einer Trommel aufgerollt.

Bei beiden Webmaschinen ist es somit erforderlich, zusätzlich zu der Trommel, auf die das Flächengebilde aufgewickelt wird, sowie den etwaigen Rotor der Mehrphasenwebmaschine die einzelnen Fäden, also die Kettfäden sowie die Schussfäden, separat zu bewegen. Hierfür werden üblicherweise Hilfsantriebe herangezogen, die einen Elektromotor umfassen. Mittels des Elektromotors wird ein jeweiliger Aktor angetrieben, mittels dessen der jeweilige Faden geführt ist.

Somit erfolgt bei Antrieb des Aktors ein Bewegen des jeweils zugeordneten Fadens.

Damit eine Steuerung des Elektromotors, insbesondere ein Anpassen der Drehgeschwindigkeit auf aktuelle Anforderungen, ermöglich ist, wird üblicherweise eine Elektronik herangezogen. Damit zudem ein Verschleiß des Elektromotors verringert ist, wird dieser meist bürstenlos ausgestaltet. In diesem Fall ist die Elektronik, mittels derer die Drehzahleinstellung des Elektromotors erfolgt, ein Bestandteil eines Umrichters, mittels dessen ein auf die jeweilige Drehgeschwindigkeit des Elektromotors eingestellter Wechselstrom bereitgestellt wird.

Der Umrichter ist elektrisch an ein Versorgungsnetzwerk angeschlossen. Zur vereinfachten Montage sowie Überwachung der Umrichter der Hilfsantriebe sind diese meist in einem gemeinsamen Schaltschrank der die Webmaschine aufweisenden Industrieanlage angeordnet. Somit ist es erforderlich, den Umrichter und den Elektromotor mittels vergleichsweise langen elektrischen Leitungen zu verbinden, was einen Materialbedarf erhöht. Auch ist hierbei darauf zu achten, dass die verlegten Leitungen keine Gefahrenquelle bilden. Falls der Elektromotor mit dem Faden bewegt wird, also beweglich gelagert und nicht starr an weiteren Bestandteilen der Webmaschine befestigt ist, ist zusätzlich darauf zu achten, dass eine ausreichende Toleranz bei den Leitungen vorhanden ist.

Aus EP 1 734 640 A2 ist eine Haltevorrichtung für die Befestigung eines elektronischen Geräts, insbesondere eines Frequenzumrichters, an einem luftgekühlten, mit Kühlrippen versehenen Elektromotor bekannt. Zwischen Gerät und Elektromotor sind mehrere Haltekomponenten angeordnet.

In DE 10 2017 220 970 A1 ist ein Antrieb mit einem ein Motorgehäuse aufweisenden, flüssigkeitsgekühlten Elektromotor und mit einem ein Umrichtergehäuse aufweisenden, flüssigkeitsgekühlten Umrichter offenbart. Das Umrichtergehäuse ist lösbar an dem Motorgehäuse angebunden.

In DE 10 2007 046 662 A1 ist ein Baukasten zur Herstellung einer modular aufgebauten Geräteanordnung von einem oder mehreren elektromechanischen und/oder elektronischen Gerätemodulen für eine Kreiselpumpenanordnung mit Kreiselpumpe und Elektromotor mit einer und/oder zur Verbindung mit einer Haltevorrichtung mit einem mit einem Gerätemodul verbindbaren oder verbundenen Aufnahmeelement vorgestellt. Jeweils ein Gerätemodul weist eine oder mehrere Schnittstelleneinheiten zur elektronischen und/oder mechanischen Verbindung des jeweils einen Gerätemoduls mit dem Aufnahmeelement und/oder einem weiteren Gerätemodul auf.

CN 105 545 721 A zeigt eine Wärmeabstrahlstruktur, die eine Wasserpumpe und eine elektrische Einstellvorrichtung integriert. Die Wärmeabstrahlstruktur umfasst ein Wärmeabstrahlgebläse und ein mit der elektrischen Verstelleinrichtung versehenes Motorgehäuse, wobei das Wärmeabstrahlgebläse außerhalb des Motorgehäuses angeordnet ist. Das Motorgehäuse ist einstückig mit der elektrischen Verstelleinrichtung verbunden.

Der Erfindung liegt die Aufgabe zugrunde, einen besonders geeigneten Antrieb anzugeben, wobei insbesondere Herstellungskosten reduziert und/oder eine Montage vereinfacht sind.

Erfindungsgemäß wird diese Aufgabe durch die Merkmale des Anspruches 1 gelöst. Vorteilhafte Weiterbildungen und Ausgestaltungen sind Gegenstand der jeweiligen Unteransprüche.

Der Antrieb ist zweckmäßigerweise ein Bestandteil einer Webmaschine und hierfür geeignet, insbesondere vorgesehen und eingerichtet. Mittels des Antriebs wird beispielsweise ein Rotor oder eine Trommel der Webmaschine angetrieben, auf die eine Anzahl an Kettfäden aufgespannt oder aufgerollt ist. Hierbei erfolgt mittels des Antriebs eine Bewegung, also Rotation, des Rotors/Trommel entlang der Au-ßendehnung der Kettfäden, sodass diese entlang deren Ausdehnungsrichtung bewegt oder aufgewickelt werden. Somit ist der Antrieb ein Hauptantrieb der Webmaschine. Besonders bevorzugt jedoch ist der Antrieb ein Hilfsantrieb der Webmaschine, und mittels dessen erfolgt eine Bewegung eines Fadens, beispielsweise eines Kettfadens oder eines Schussfadens, senkrecht zur Ausdehnungsrichtung der Kettfäden. Mit anderen Worten wird mittels des Hilfsantriebs ein Faden der Webmaschine geführt, dieser jedoch nicht aufgerollt.

Der Antrieb weist einen Elektromotor auf, der besonders bevorzugt bürstenlos ausgestaltet ist. Der Elektromotor weist vorzugsweise eine Anzahl an Elektromagneten auf, die vorzugsweise zu einer Anzahl an Phasen miteinander verschaltet sind. Insbesondere ist die Anzahl der Elektromagneten gleich dem Zweifachen oder Dreifachen der Anzahl der Phasen, und jeder Phasen sind gleich viele der Elektromagneten zugeordnet. Die Phasen selbst sind beispielsweise zu einer Dreiecks- oder Sternschaltung miteinander verschaltet. Insbesondere ist hierbei die Leistung des Elektromotors zwischen 0,1 kW und 1 kW, beispielsweise zwischen 0,3 kW und 0,6 kW. Vorzugsweise ist die Nenndrehzahl des Elektromotors zwischen 400 1/min. und 700 1/min. oder zwischen 450 1/min. und 600 1/min. Geeigneterweise ist das Nenndrehmoment des Elektromotors zwischen 0,5 Nm und 2 Nm und beispielsweise zwischen 0,7 Nm und 1,2 Nm. Vorzugsweise ist das Maximaldrehmoment des Elektromotors zwischen 1 Nm und 5 Nm und beispielsweise zwischen 2 Nm und 4 Nm.

Der Antrieb weist ferner einen Umrichter auf, der ein Gehäuse sowie eine darin angeordnete Elektronik aufweist. Insbesondere bildet die Elektronik den Zusammenschluss sämtlicher elektrischen und/oder elektronischen Bauteile des Umrichters. Die Elektronik dient geeigneterweise der Bestromung des Elektromotors, vorzugsweise der etwaigen Elektromagneten. Insbesondere weist die Elektronikeine Brückenschaltung auf, wobei die Brückenschaltung auf die Ausgestaltung des Elektromotors angepasst ist. Zweckmäßigerweise ist der Elektromotor ein Zweiphasen- oder Dreiphasenelektromotor, und die Elektronik weist eine B4- oder B6-Brückenschaltung auf. Die Brückenschaltung umfasst zweckmäßigerweise eine Anzahl an Halbleiterschaltern, vorzugsweise Leistungshalbleiterschalter. Die Leistungshalbleiterschalter sind zum Beispiel Feldeffekttransistoren, zweckmäßigerweise MOSFETs. Vorzugsweise werden als Leistungshalbleiterschalter IGBTs oder GTOs herangezogen. Geeigneterweise wird mittels der Elektronik eine elektrische Spannung von 56 V bereitgestellt. Somit ist auch ein Betrieb mit einer vergleichsweise großen Leistung möglich, wobei dennoch eine Gefährdung von Personen ausgeschlossen ist.

Der Umrichter weist ein Gehäuse auf, das beispielsweise topfförmig oder hohlzylindrisch ist. An einem oder beiden Enden ist das Gehäuse insbesondere mittels jeweils eines Deckels verschlossen, der bzw. die an dem Gehäuse befestigt sind, vorzugsweise lösbar mittels Schrauben oder dergleichen. Das Gehäuse ist vorzugsweise aus einem Metall gefertigt, beispielsweise aus einem Aluminium, also reinem Aluminium oder einer Aluminiumlegierung. Somit ist ein Gewicht des Antriebs verringert. Innerhalb des Gehäuses ist die Elektronik angeordnet, die somit mittels des Gehäuses geschützt ist. Besonders bevorzugt ist das Gehäuse des Umrichters im Montagezustand elektrisch gegen Masse geführt. Hierfür ist das Gehäuse geeignet, insbesondere vorgesehen und eingerichtet. Somit sind eine Sicherheit sowie eine elektromagnetische Verträglichkeit (EMV) erhöht.

Der Umrichter ist an den Elektromotor befestigt, vorzugsweise lösbar. Somit ist es möglich, den Umrichter und den Elektromotor zu trennen, insbesondere bei einem Ausfall einer der beiden Komponenten. Zweckmäßigerweise ist zwischen dem Umrichter und dem Elektromotor eine oder mehrere elektrische Leitungen vorhanden, mittels derer die Bestromung des Elektromotors erfolgt. Hierfür sind die elektrischen Leitungen zweckmäßigerweise elektrisch mit der Elektronik des Umrichters kontaktiert und vorzugsweise in das Gehäuse geführt. Besonders bevorzugt weist der Elektromotor ein Gehäuse oder zumindest ein Gehäuseabschnitt auf, der aus einem Metall erstellt ist. Mittels des Motorgehäuses erfolgt eine Abschirmung der Umgebung von elektromagnetischen Wellen, sodass eine elektromagnetische Verträglichkeit (EMV) erhöht ist. Vorzugsweise ist hierbei das Motorgehäuse elektrisch gegen Masse geführt. Vorzugsweise umfasst das Gehäuse hierfür einen entsprechenden Anschluss. Besonders bevorzugt sind das Motorgehäuse und das Gehäuse des Umrichters mittels eines Massekabels elektrisch miteinander verbunden, sodass diese bei Betrieb auf dem gleichen elektrischen Potential liegen. Besonders bevorzugt ist hierbei das Massekabel außenseitig an dem Gehäuse sowie in dem Motorgehäuse angeschlossen und vorzugsweise dort befestigt. Somit ist eine nachträgliche Montage des Massekabels ermöglicht, was die Herstellung vereinfacht. Vorzugsweise umfasst das Massekabel zwei Kabelschuhe mit entsprechenden Ösen, wobei die Ösen mittels einer jeweils korrespondierenden Schraube an dem Motorgehäuse bzw. dem Gehäuse des Umrichters befestigt sind. Beispielsweise weist der Antrieb zusätzlich ein Getriebe auf, das mittels des Elektromotors angetrieben ist, und das beispielsweise an diesen befestigt ist.

Da der Umrichter an dem Elektromotor befestigt ist, ist somit eine Baueinheit gebildet. Daher ist eine Montage des Antriebs vereinfacht, da lediglich die Baueinheit montiert werden muss, insbesondere an der Webmaschine. Auch sind somit Herstellungskosten reduziert. Zudem ist es dabei nicht erforderlich, dass etwaige elektrische Verbindungsleitungen zwischen dem Umrichter und dem Elektromotor auf eine Bewegung des Elektromotors bezüglich des Umrichters angepasst werden müssen, was eine Herstellung des Antriebs vereinfacht. Somit ist es möglich, den Antrieb bereits vorgefertigt bereitzustellen, wobei zu diesem Zeitpunkt der spezielle Anwendungsfall noch nicht bekannt sein muss.

Zweckmäßigerweise ist die Elektronik im Montagezustand signaltechnisch mit einer Prozesssteuerung verbunden. Hierfür weist die Elektronik bevorzugt eine entsprechende Schnittstelle auf, die insbesondere einem Bus-Standard genügt, beispielsweise Profinet oder Ethercat. Vorzugsweise umfasst die Elektronik eine oder mehrere Statusanzeigen, beispielsweise Leuchten, wie LEDs (light-emitting Dioden). Bevorzugt weist das Gehäuse oder ein etwaiger Deckel, mittels dessen das Gehäuse verschlossen ist, eine Sichtöffnung auf, sodass von außerhalb die Statusanzeige inspiziert werden kann. Insbesondere ist die Sichtöffnung lediglich mittels einer Aussparung des Deckels bzw. des Gehäuses gebildet. Besonders bevorzugt jedoch ist diese mittels einer durchsichtigen Folie abgedeckt, sodass ein Eindringen von Fremdpartikeln in das Gehäuse unterbunden ist. In einer Alternative hierzu ist das Gehäuse oder beispielsweise der Deckel zumindest teilweise transparent ausgestaltet und beispielsweise aus einem Plexiglas gefertigt, sodass die Statusanzeige von außerhalb des Gehäuses durch dieses bzw. den etwaigen Deckel wahrnehmbar ist. Insbesondere wird mittels der Statusanzeige ein Betriebszustand des Antriebs oder zumindest des Umrichters signalisiert, und/oder es wird angezeigt, ob ein Datenaustausch über die etwaige Signalschnittstelle erfolgt.

Das Gehäuse ist zweckmäßigerweise einstückig ausgestaltet, was eine Montage erleichtert. Beispielsweise ist das Gehäuse als ein Druckgussteil erstellt. Besonders bevorzugt jedoch ist das Gehäuse aus einer Hohlprofilleiste gefertigt, und besteht beispielsweise aus dieser. Die Hohlprofilleiste ist somit ein Strangpressprofil und beispielsweise ein Halbzeug. Insbesondere wird zur Fertigung des Gehäuses Meterware herangezogen, die auf die Länge des Gehäuses abgelängt wird. Somit ist eine Herstellung des Gehäuses vereinfacht. Das Gehäuse ist zweckmäßigerweise hohlzylinderförmig, und an dieses wird beispielsweise an einem oder auf beiden Enden ein Deckel montiert, sodass ein Eindringen von Fremdpartikeln in das Gehäuse unterbunden ist. Zum Beispiel weist das Gehäuse einen im Wesentlichen rechteckförmigen Querschnitt auf. Besonders bevorzugt jedoch sind die Ecken des Querschnitts im Vergleich zu einem Rechteck abgerundet. Somit ist eine Stabilität erhöht. Auch ist eine Beschädigung von weiteren Bestandteilen oder eine Verletzung einer Person auf diese Weise ausgeschlossen. Geeigneterweise sind die Ecken hierbei ausgestellt und somit nach außen vorspringend. Die zwischen den Ecken liegenden Bereiche sind somit nach innen versetzt und vorzugsweise geradlinig. Zusammenfassend ist somit der Querschnitt rechteckförmig, wobei die Ecken abgerundet und nach außen ausgewölbt sind. Insbesondere ist somit ein knochenförmiger Querschnitt gebildet. Aufgrund eines derartigen Querschnitts ist die Oberfläche des Gehäuses vergrößert, sodass eine Wärmeabfuhr von dem Gehäuse in die Umgebung verbessert ist. Auf diese Weise ist eine Kühlung der Elektronik über das Gehäuse verbessert.

Das Gehäuse weist eine Leiste auf, die parallel zu dem Elektromotor verläuft, und die zweckmäßigerweise außenseitig an einem Grundkörper des Gehäuses angebunden, vorzugweise angeformt, ist, wobei der Grundkörper im Wesentlichen hohlzylindrisch ist. Die Leiste verläuft insbesondere entlang der Länge des Gehäuses und ist vorzugsweise parallel zur einer Achse des etwaigen hohlzylindrischen Grundkörpers. Mittels der Leiste ist eine definierte Position zur Montage des Elektromotors bereitgestellt, wobei die Funktionsweise des Grundkörpers nicht beeinträchtigt wird. Innerhalb des Grundkörpers ist hierbei zweckmäßigerweise die Elektronik angeordnet. Da die Montage des Elektromotors an der Leiste erfolgt, wird somit der für die Elektronik bereitgestellte Platz nicht beeinflusst, weswegen eine Herstellung des Antriebs vereinfacht ist.

Der Elektromotor weist eine Lasche auf, die an der Leiste angebunden ist. Somit ist bei dem Elektromotor ein bestimmter Bereich vorgesehen, der lediglich zur Befestigung an dem Umrichter vorgesehen ist. Auch ist auf diese Weise der Rest des Elektromotors von dem Umrichter, insbesondere dem etwaigen Grundkörper des Gehäuses beabstandet, weswegen ein Luftdurchsatz zwischen dem Umrichter und dem Elektromotor ermöglicht ist. Somit ist eine Kühlung verbessert. Insbesondere ist die Lasche mit der Leiste verschraubt, weswegen eine Montage und Demontage vereinfacht ist. Zur Befestigung wird insbesondere eine Schraube, im Weiteren Montageschraube bezeichnet, verwendet, die zweckmäßigerweise senkrecht zu dem Verlauf der Leiste und/oder senkrecht zu einer Verbindungsgeraden zwischen dem Umrichter und dem Elektromotor ist. Somit ist eine Montage der Montageschraube vereinfacht. Die Montageschraube ist vorzugsweise durch ein Montageloch der Lasche geführt.

Beispielsweise weist die Leiste ein Innengewinde auf, in die die Montageschraube gedreht ist. Besonders bevorzugt jedoch weist der Antrieb eine Hilfsleiste auf, die auf der der Lasche gegenüberliegenden Seite an der Leiste angeordnet ist, und an dieser zweckmäßigerweise anliegt. Somit ist die Leiste zwischen der Hilfsleiste und der Lasche angeordnet. Mittels der Hilfsleiste ist insbesondere das Innengewinde bereitgestellt, und die Leiste weist ein Durchgangsloch auf, das beispielsweise glatt ausgestaltet ist. Somit ist eine Fertigung des Gehäuses vereinfacht. Die Hilfsleiste ist beispielsweise aus einem Stahl erstellt, sodass eine Befestigung der Montageschraube verbessert ist. Insbesondere weist die Leiste eine Aufnahme für die Hilfsleiste auf, innerhalb derer diese zumindest teilweise einliegt. Somit wird mittels der Aufnahme eine Bewegung der Hilfsleiste zumindest teilweise eingeschränkt, was eine Montage vereinfacht. Die Aufnahme ist beispielsweise mittels Fräsen erstellt.

Zweckmäßigerweise weist der Elektromotor eine weitere Lasche auf, die insbesondere mit der Leiste verschraubt ist. Somit ist eine Stabilität erhöht. Hierbei weist die weitere Lasche bevorzugt ein entsprechendes Montageloch auf, innerhalb derer eine entsprechende Montageschraube angeordnet ist. Diese Montageschraube reicht hierbei zweckmäßigerweise durch ein weiteres Durchgangsloch der Leiste hindurch, und ist zweckmäßigerweise mit der etwaigen Hilfsleiste verschraubt. Hierbei sind die beiden Montageschrauben zweckmäßigerweise an der gleichen Hilfsleiste montiert, sodass eine Anzahl an benötigten Bauteilen verringert ist.

Das Gehäuse weist eine weitere Leiste auf, die parallel zu der Leiste ist, und beispielsweise spiegelbildlich zu dieser ausgestaltet ist. Eine weitere Lasche des Elektromotors ist vorzugsweise mit dieser Leiste verschraubt, sodass eine Stabilität erhöht ist. Insbesondere ist der weiteren Leiste eine weitere Hilfsleiste zugeordnet, wobei beispielsweise die beiden Hilfsleisten zwischen den beiden Leisten angeordnet sind. Somit ist ein Anbringen der Montageschrauben vereinfacht.

Beispielsweise liegt der Elektromotor an dem Gehäuse mechanisch direkt an. Besonders bevorzugt jedoch sind der Elektromotor und das Gehäuse mittels einer Buchse aus einem Polytetrafluorethylen (PTFE) thermisch entkoppelt. Zweckmäßigerweise ist die Buchse mechanisch zwischen dem Elektromotor und dem Gehäuse angeordnet, insbesondere zwischen der Leiste und der Lasche. Mittels der Buchse wird somit ein Übertrag an thermischer Energie zwischen dem Elektromotor und dem Umrichter unterbunden, und das etwaige Motorgehäuse oder zumindest die Lasche sowie das Gehäuse können aus einem thermisch leitfähigen Material erstellt werden, wie einem Metall, ohne dass ein Temperatureintrag von dem Elektromotor in das Gehäuse sowie umgekehrt erfolgt. Somit ist es möglich, den Elektromotor sowie den Umrichter zueinander separat zu kühlen, und eine thermische Belastung der einzelnen Komponenten ist verringert.

Bevorzugt weist die Lasche somit das Montageloch auf, durch das die Montageschraube geführt ist. Die Montageschraube liegt zweckmäßigerweise endseitig an der Leiste an und ist vorzugsweise durch das etwaige Durchgangsloch geführt, wobei zwischen dem Durchgangsloch und der Montageschraube zum Beispiel eine Spielpassung gebildet ist. Somit ist eine Bewegung der Montageschraube bezüglich des Durchgangslochs unterbunden. Zweckmäßigerweise ist hierbei die Hilfsleiste vorhanden, die zum Beispiel mechanisch direkt an der Leiste anliegt. Somit ist eine Stabilität erhöht.

Das Montageloch ist zweckmäßigerweise mittels der Buchse ausgekleidet, sodass die Montageschraube mechanisch von der Lasche beabstandet ist, und sodass ein thermischer Energieaustausch zwischen der Montageschraube und der Lasche vermieden ist. Mit anderen Worten erfolgt kein direkter mechanischer Kontakt der Montageschraube mit der Lasche. Vorzugsweise ist hierbei zumindest teilweise eine Spielpassung zwischen der Buchse, dem Montageloch und der Montageschrauben realisiert, und/oder die Montageschraube liegt bevorzugt kraftschlüssig über die Buchse an der Lasche an. Somit ist eine Stabilität erhöht.

Beispielsweise ist die Buchse einstückig und zum Beispiel hohlzylindrisch ausgestaltet. Zweckmäßigerweise ist an einem der Enden des Hohlzylinders ein Kragen angeformt. Der Kragen ist hierbei insbesondere radial nach außen überstehend bezüglich des Rests der Buchse, der insbesondere hohlzylindrisch ausgestaltet ist. Zur Montage wird hierbei die Buchse von der dem Kragen gegenüberliegenden Seite in das Montageloch eingesteckt, und der Kragen weist vorzugsweise eine größere Ausdehnung als das Montageloch auf. Somit ist mittels des Kragens ein Anschlag gebildet, und ein übermäßiges Einführen der Buchse in das Montageloch ist verhindert.

Geeigneterweise ist der Kragen zwischen der Lasche und einem Kopf der Montageschraube angeordnet. Insbesondere liegt hierbei der Kopf der Montageschrauben über den Kragen der Buchse an der Lasche an. Somit ist auch dort kein mechanischer direkter Kontakt zwischen dem Kopf und der Lasche vorhanden, weswegen die thermische Entkopplung vorhanden ist. Beispielsweise liegt hierbei der Kopf direkt an dem Kragen an. Besonders bevorzugt jedoch ist zwischen dem Kragen und dem Kopf ein O-Ring, insbesondere eine Unterlegscheibe, angeordnet. Somit ist eine Beschädigung des Kragens bei Montage der Montageschrauben vermieden.

Besonders bevorzugt weist die Buchse zwei zueinander baugleiche Teile auf, die jeweils einen Kragen aufweisen, der an einem entsprechenden Rest angeformt ist, der beispielsweise hohlzylindrisch ist. Hierbei ist bevorzugt jedes der Teile von gegenüberliegenden Seiten in das Montageloch eingesteckt. Somit ist einer der Kragen zwischen dem Kopf der Montageschraube und der Lasche angeordnet. Der verbleibende Kragen ist besonders bevorzugt zwischen der Lasche und der Leiste angeordnet und liegt vorzugsweise an diesen jeweils an. Somit ist einerseits eine Stabilität erhöht. Andererseits ist mittels der Kragen ein direkter mechanischer Kontakt zwischen der Lasche und der Leiste verhindert, weswegen ein Wärmeeintrag zwischen dem Elektromotor und dem Umrichter sowie umgekehrt vermieden ist.

Beispielsweise sind die Laschen an dem etwaigen Motorgehäuse angeformt. Der Elektromotor umfasst ein Lagerschild, das die Lasche umfasst. Mittels des Lagerschilds ist ein Lager gehalten, mittels dessen eine Welle des Elektromotors drehbar gelagert ist. Insbesondere ist das Lager hierbei ein Wälzlager, wie ein Kugellager. Da die Laschen ein Bestandteil der Lagerschilde ist, ist es möglich, einen bereits bestehenden Elektromotor zu verwenden, und dort lediglich das Lagerschild durch ein Lagerschild mit der Lasche auszutauschen. Somit ist lediglich eine vergleichsweise geringe Anpassung erforderlich, weswegen Herstellungskosten reduziert sind.

Zum Beispiel ist das Lagerschild ein A-seitiges Lagerschild oder eine B-seitiges Lagerschild. Sofern der Elektromotor mehrere Laschen aufweist, die an dem Gehäuse des Umrichters befestigt sind, ist zweckmäßigerweise jedem der Lagerschilde zumindest eine der Laschen zugeordnet. Es sind jedem Lagerschild jeweils zwei der Laschen zugeordnet, sodass der Elektromotor insgesamt mittels vier Laschen an der Leiste befestigt ist. Zudem befinden sich die Laschen zueinander vergleichsweise weit entfernt, was eine Stabilität erhöht. Zweckmäßigerweise ist das Lagerschild bzw. sind die Lagerschilde aus einem Aluminium erstellt, vorzugsweise als Druckgussteil. Somit ist eine Robustheit erhöht.

Insbesondere ist der Elektromotor parallel zu dem Umrichter ausgerichtet, weswegen ein Platzbedarf verringert ist. Beispielsweise ist lediglich eine einzige Montageposition zu Befestigung des Elektromotors an dem Umrichter vorhanden. Besonders bevorzugt jedoch sind mehrere Montagepositionen zur Befestigung des Elektromotors an dem Umrichter vorhanden. Mit anderen Worten sind somit zwei oder mehrere Montagepositionen vorhanden. Somit ist es möglich, den Elektromotor in unterschiedlichen Positionen an dem Umrichter zu montieren, was eine Flexibilität erhöht. Insbesondere unterscheiden sich hierbei die Montagepositionen nicht in der Orientierung des Elektromotors zu dem Umrichter sondern im Hinblick auf etwaige Aufnahmepunkt des Gehäuses für den Elektromotor sowie deren Abstand zueinander. Insbesondere umfasst der Umrichter somit eine Anzahl an Durchgangslöchern, sodass es möglich ist, den Elektromotor an unterschiedlichen Positionen bezüglich des Umrichters anzuschrauben. Vorzugsweise ist hierbei ein Abstand der durch Durchgangslöcher zueinander unterschiedlich. Folglich ist es möglich, unterschiedliche Elektromotoren an dem Umrichter zu befestigen, die sich insbesondere in deren Position der Laschen unterscheiden. Folglich ist möglich, Elektromotoren mit unterschiedlichen Längen zu verwenden, wobei die Länge insbesondere zu den Leistungsdaten des Elektromotors korrespondiert. Somit ist es möglich, den Antrieb mit unterschiedlichen Leistungsdaten bereitzustellen, wofür stets der gleiche Umrichter verwendet werden kann. Lediglich der Elektromotor muss entsprechend ausgetauscht werden. Somit kann eine vergleichsweise große Anzahl an Gleichteile verwendet werden, was Herstellungskosten reduziert.

Beispielsweise weist die Elektronik eine einzige Leiterplatte auf, mittels derer insbesondere die etwaige Brückenschaltung sowie eine Treiberschaltung hierfür bereitgestellt ist. Besonders bevorzugt jedoch weist die Elektronik mehrere Leiterplatten, also drei, vier oder mehr Leiterplatten auf. Besonders bevorzugt jedoch umfasst die Elektronik genau zwei Leiterplatten. Die Leiterplatten sind zweckmäßigerweise rechteckförmig, was eine Herstellung vereinfacht.

Beispielsweise ist auf einer der Leiterplatten die Brückenschaltung und auf einer anderen die etwaige Treiberschaltung hierfür angeordnet. Insbesondere unterscheidet sich die mittels der Leiterplatten geführten elektrische Ströme und/oder die dort anliegende elektrische Spannung. So liegt beispielsweis auf einer der Leiterplatten lediglich eine elektrische Spannung von höchstens 12 V und auf der anderen eine höhere elektrische Spannung an. Somit ist eine Sicherheit erhöht.

Die Leiterplatten sind vorzugsweise zueinander beabstandet, sodass ein elektrischer Kurzschluss zwischen diesen vermieden ist, insbesondere sofern mittels derer unterschiedliche elektrische Spannungen geführt werden. Zweckmäßigerweise sind die Leiterplatten übereinander gestapelt, sodass sich diese zumindest teilweise überlappen. Insbesondere ist die Ausdehnung der Leiterplatten zueinander im Wesentlichen gleich, und die Projektionen aufeinander senkrecht zu deren jeweiliger Ausdehnung überlappt jeweils vollständig. Somit ist ein Platzbedarf verringert. Geeigneterweise sind die Leiterplatten aneinander befestigt, insbesondere mittels eines Doms, vorzugsweise mehrere Dome, wobei beispielsweise jeder der Ecken der Leiterplatten ein derartiger Dom zugeordnet ist. Somit ist eine sandwichartige Elektronik bereitgestellt, und zur Montage ist es somit lediglich erforderlich, den Verbund der Leiterplatten in das Gehäuse einzuschieben, was eine Montage erleichtert.

Vorzugsweise ist eine der Leiterplatte mittels eines Befestigungsmittels an dem Gehäuse befestigt. Das Befestigungsmittel ist zweckmäßigerweise eine Schraube, die von außerhalb des Gehäuses in dieses eingedreht wird, bis dieses mittels eines an dieser Leiterplatte befestigten Elements aufgenommen ist. Somit ist eine Position der Leiterplatten innerhalb des Gehäuses mittels des Befestigungsmittels vorgegeben. Die verbleibende Leiterplatte/Leiterplatten ist hierbei insbesondere nicht an dem Gehäuse direkt befestigt. Somit ist eine Montage vereinfacht. Auch ist ein Kurzschluss dieser Leiterplatte(n) aufgrund eines direkten mechanischen Kontakts mit dem Gehäuse vermieden. Vorzugsweise ist hierbei das Gehäuse als Hohlprofilleiste ausgestaltet, und zur Montage wird die Elektronik, also die auf aneinander befestigen Leiterplatten in die Hohlprofilleiste in deren Längsrichtung eingeschoben und anschließend mittels des Befestigungsmittels an dem Gehäuse befestigt. Somit ist eine Montage vergleichsweise zeitsparend möglich.

Beispielsweise liegt die Elektronik innenseitig an dem Gehäuse an oder ist mittels Haltelementen an einer Innenseite des Gehäuses gehalten. Besonders bevorzugt jedoch ist die Elektronik mit dem Gehäuse teilweise vergossen. Somit wird die Elektronik mittels des Vergusses in dem Gehäuse stabilisiert. Hierbei ist keine spezielle Ausrichtung der etwaigen Haltelemente oder dergleichen erforderlich, weswegen eine Montage vereinfacht ist. Aufgrund des Vergusses ist zudem ein Wärmeübertrag von der Elektronik auf das Gehäuse verbessert, sodass diese vergleichsweise effektiv gekühlt wird. Vorzugsweise wird als Verguss(-masse) ein Epoxidharz oder besonders bevorzugt eine Polyurethan-Vergussmasse herangezogen, die insbesondere eine Wärmeleitfähigkeit zwischen 0,5 W/mK und 1 W/mK und beispielsweise im Westlichen gleich 0,6 W/mK aufweist. Insbesondere wird hierfür die Vergussmasse verwendet, die unter dem Handelsnamen WEVOPUR 9251 FL, WEVOPUR 403 FL oder WEVOPUR 512 FL von WEVO erhältlich ist. Zweckmäßigerweise ist hierbei der Querschnitt des Gehäuses, zumindest dessen Innenquerschnitt, rechteckförmig, wobei die Ecken abgerundet und nach außen ausgewölbt sind. Somit ist ein benötigtes Volumen der Vergussmasse verringert, weswegen Herstellungskosten reduziert sind.

Beispielsweise wird zur Herstellung die Elektronik in das Gehäuse eingeführt und dort geeignet positioniert, beispielsweise mittels des etwaigen Befestigungsmittels. Anschließend wird das Gehäuse zumindest teilweise mit dem Verguss befüllt. Beispielsweise ist hierbei das Gehäuse im Wesentlichen hohlzylindrisch ausgestaltet, und dieses wird zum Einbringen des Vergusses vertikal ausgerichtet. Ein Austritt des Vergusses an der Unterseite des Gehäuses wird beispielsweise mittels eines dort angeordneten und an dem Gehäuse angebundenen Deckels verhindert. Alternativ hierzu ist das Gehäuse auf eine Montageoberfläche aufgesetzt, mittels derer ein Austritt des Vergusses aus dem Gehäuse vermieden ist. Nach Aushärten des Vergusses wird dieses von der Montagefläche entfernt.

In einer Abwandlung wird zunächst das Gehäuse mit dem Verguss teilweise befüllt, und dieser wird anschließend ausgehärtet, sodass der Verguss einen ersten Teil aufweist. Der Austritt wird beispielsweise mittels des Deckels oder der Montagefläche verhindert. Im Anschluss hieran wird die Elektronik auf den ersten Teil aufgesetzt, und anschließend wird der Rest des Vergusses in das Gehäuse eingefüllt, sodass die Elektronik mittels des Vergusses zumindest teilweise umschlossen wird. Somit weist der Verguss den ersten Teil, auf den die Elektronik aufgesetzt ist, und den zweiten Teil auf, in den die Elektronik eingebettet ist. Somit ist keine vergleichsweise komplizierte Befestigung der Elektronik an dem Gehäuse erforderlich. Insbesondere betrifft die Erfindung auch ein Verfahren zur Herstellung eines derartigen Umrichters, bei dem zunächst der erste Teil des Vergusses in das Gehäuse eingefüllt wird, auf den nach anschließendem Aushärten die Elektronik aufgesetzt wird. Nachfolgende wird der zweite Teil des Vergusses in das Gehäuse eingefüllt, sodass die Elektronik in den zweiten Teil eingebettet ist.

Beispielsweise ist die Elektronik vollständig mit dem Verguss überzogen und somit vollständig eingegossen. Eine elektrische Kontaktierung der Elektronik mit einer elektrischen Leitung oder dergleichen erfolgt hierbei insbesondere vor Anbringung des Vergusses, sodass auch die Kontaktstelle mit dem Verguss überzogen ist. Somit ist ein Ablösen unterbunden und folglich eine Robustheit erhöht. Besonders bevorzugt jedoch ragt ein Freiende der Elektronik aus dem Verguss. Das Freiende der Elektronik ist somit nicht mit dem Verguss versehen. Zweckmäßigerweise ist hierbei zumindest die 50%, 60%, 70 %, 80 % oder 90 % der Elektronik mit dem Verguss versehen. Insbesondere erfolgt an diesem Freiende eine Kontaktierung der Elektronik mit einer elektrischen Leitung oder sonstigen weiteren Bestandteilen des Antriebs oder des Umrichters. Hierbei ist es auch nach Abschluss der Montage möglich, die Kontaktierung zu lösen oder nach Montage der Elektronik in dem Umrichter diese zu erstellen, was eine Montage weiter vereinfacht.

Geeigneterweise ist der Umrichter an ein Kabel angeschlossen. Das Kabel ist hierbei im Montagezustand zweckmäßigerweise an ein Versorgungsnetzwerk angeschlossen. Insbesondere umfasst der Antrieb eine Zugentlastungsbaugruppe, mittels derer das Kabel mechanisch gehalten ist. Insbesondere erfolgt eine elektrische Kontaktierung des Umrichters, insbesondere der Elektronik, mit dem Kabel beabstandet von der Zugentlastungsbaugruppe, und diese dient somit insbesondere der mechanischen Fixierung des Kabels an dem Antrieb. Vorzugsweise ist die Zugentlastungsbaugruppe an dem Umrichter befestigt, sodass nach der Zugentlastungsbaugruppe zu der Elektronik lediglich ein vergleichsweise kurzer Bereich mittels des Kabels noch überbrückt werden muss, weswegen eine Robustheit erhöht ist.

Beispielsweise ist hierbei die Zugentlastungsbaugruppe innerhalb des Gehäuses angeordnet, sodass dieses mittels des Gehäuses geschützt ist. Besonders bevorzugt ist die Zugentlastungsbaugruppe außenseitig an dem Gehäuse des Umrichters angebunden, beispielsweise dort befestigt. Geeigneterweise ist die Zugentlastungsbaugruppe lösbar an dem Gehäuse angebunden und vorzugsweise mit diesem verschraubt. Somit ist es möglich, zunächst die Zugentlastungsbaugruppe an dem Kabel anzubringen, und nachfolgend die Zugentlastungsbaugruppe an den Umrichter zu befestigen. Folglich ist eine Montage vereinfacht.

Beispielsweise weist der Antrieb mehrere Kabel auf, wobei jedem der Kabel jeweils eine entsprechend Zugentlastungsbaugruppe zugeordnet ist. Besonders bevorzugt jedoch sind mehrere Kabel mittels jeweils einer Zugentlastungsbaugruppe gehalten, weswegen eine Anzahl an benötigten Bauteilen verringert ist. Somit sind Herstellungskosten reduziert. Zweckmäßigerweise umfasst der Antrieb mehrere Zugentlastungsbaugruppen, wobei insbesondere mittels einer der Zugentlastungsbaugruppe mehrere Kabel gehalten werden. Da mehrere Zugentlastungsbaugruppen vorhanden sind, können die Kabel zumindest teilweise separat und unabhängig montiert werden, was eine Montage vereinfacht.

Besonders bevorzugt umfasst die Zugentlastungsbaugruppe zwei Platten, die aneinander befestigt sind. Eine der Platten oder besonders bevorzugt beide der Platten weisen eine Aussparung auf, innerhalb derer das Kabel einliegt. Somit wird das Kabel mittels der beiden Platten in der Aussparung gehalten. Zweckmäßigerweise sind die beiden Platten zueinander spiegelbildlich oder baugleich, weswegen Gleichteile verwendet werden können, was Herstellungskosten reduziert. Vorzugsweise sind die beiden Platten lösbar aneinander befestigt, weswegen eine Montage und Demontage des Kabels erleichtert ist. Geeigneterweise sind die beiden Platten miteinander verschraubt, und die Platten weisen somit eine entsprechende Aussparung, beispielsweise Loch, auf, durch die eine entsprechende Schraube ragt. Auf der dem Kopf der Schraube gegenüberliegenden Seite ist hierbei zweckmäßigerweise auf die Schraube eine Mutter aufgesetzt, die angezogen ist, sodass die beiden Platten kraftschlüssige aneinander anliegen. Somit ist das Kabel vergleichsweise sicher zwischen den beiden Platten gehalten, wobei aufgrund der Aussparung keine Quetschungen des Kabels erfolgt.

Beispielsweise ist die Aussparung hierbei glatt ausgestaltet. Besonders bevorzugt jedoch umfasst die Aussparung oder zumindest eine der Aussparung eine Anzahl an Rippen, die vorzugsweise im Wesentlichen senkrecht zu der Ausdehnung des Kabels verlaufen. Die Rippen springen hierbei in die Aussparung vor, sodass dort ein verkleinerter Durchmesser der Aussparung vorhanden ist. Mittels der Rippen erfolgt hierbei ein vergleichsweise sicheres Halten des Kabels.

Zweckmäßigerweise sind die beiden Platten oder zumindest eine der Platten aus einem Metall erstellt, was eine Robustheit erhöht. Als Metall wird zum Beispiel ein Stahl oder ein Aluminium herangezogen. Besonders bevorzugt umfasst das Kabel einen Mantel, der beispielsweise aus einem Kunststoff gefertigt ist, und der somit eine Isolierschicht bildet. Mittels des Mantels ist eine Abschirmschicht bevorzugt abgedeckt, die zweckmäßigerweise aus einer Metallfolie gefertigt ist, beispielsweise aus einer Aluminium- oder Kupferfolie. Mittels der Abschirmschicht ist vorzugsweise eine weitere Schicht umgeben, mittels derer eine oder mehrere Litzen gehalten sind. Somit erfolgt mittels der Abschirmschicht eine elektrische Abschirmung der Litzen, sodass elektromagnetische Wellen von den Litzen abgehalten werden, was eine Funktionssicherheit erhöht.

Die Aussparung weist vorzugsweise einen ersten Bereich und einen zweiten Bereich auf, die beide im Wesentlichen zylindrisch und konzentrisch zueinander angeordnet sind, und die mittels einer Stufe zueinander übergehen. Hierbei weist der erste Bereich einen im Vergleich zu dem zweiten Bereich vergrößerten Durchmesser auf. Geeigneterweise entspricht der Durchmesser der mittels der ersten Bereiche gebildeten Öffnung in den Platten dem Durchmesser des Kabels mit dem Mantel, oder ist geringfügig kleiner. Der Durchmesser der mittels der zweiten Bereiche gebildeten Öffnung entspricht vorzugsweise dem Durchmesser der Abschirmschicht oder ist geringfügig kleiner. Zumindest jedoch sind die beiden Bereiche auf das verwendete Kabel abgestimmt. Der Mantel liegt hierbei an dem ersten Bereich an, insbesondere mechanisch direkt, und reicht bis zu der Stufe. Somit befindet sich der Mantel in der Aussparung lediglich in dem Bereich mit dem vergrößerten Durchmesser. Im weitere Verlauf oder zumindest in dem daran angrenzende Abschnitt des Kabels ist der Mantel entfernt, sodass das Kabel mittels der Abschirmschicht begrenzt wird. Diese liegt an dem zweiten Bereich an, vorzugsweise direkt. Somit erfolgt eine elektrische Kontaktierung der Abschirmschicht mit den beiden Platten.

Zusammenfassend ist mittels des ersten Bereichs das Kabel mechanisch gehalten, und mittels des zweiten Bereichs erfolgt eine elektrische Kontaktierung der Abschirmschicht mit den beiden Platten. Vorzugsweise sind hierbei die beiden Platten elektrisch bei Betrieb mit Masse kontaktiert, und/oder die beiden Platten sind elektrisch direkt mit dem Gehäuse des Umrichters kontaktiert oder zumindest auf dem gleichen elektrischen Potential wie dieses. Somit werden die etwaigen Litzen des Kabels mittels der Abschirmschicht vergleichsweise effizient abgeschirmt, was eine elektromagnetische Verträglichkeit erhöht.

In einer Alternative hierzu weist die Aussparung beispielsweise lediglich den ersten Bereich auf, sodass lediglich ein mechanisches Halten des Kabels mittels der Zugentlastungsbaugruppe erfolgt. In einer Alternative hierzu ist beispielsweise lediglich der zweite Bereich vorhanden, und bei dem Kabel ist der Mantel in dem vollständigen Abschnitt entfernt, in dem dieses in der Aussparung einliegt. Somit erfolgt sowohl das mechanische Halten als auch die elektrische Kontaktierung lediglich mittels der Abschirmschicht des Kabels.

Nachfolgend werden Ausführungsbeispiele der Erfindung anhand einer Zeichnung näher erläutert. Darin zeigen:
- Fig. 1: schematisch eine Webmaschine mit drei Hilfsantrieben,
- Fig. 2: perspektivisch einen der Hilfsantriebe, der einen Elektromotor sowie einen Umrichter aufweist,
- Fig. 3: einen Hilfsantrieb in einer Schnittdarstellung entlang einer Längsachse,
- Fig. 4: perspektivisch eine zweite Ausführungsform des Hilfsantriebs,
- Fig. 5: perspektivisch eine weitere Ausführungsform des Hilfsantrieb,
- Fig. 6 - 8: aus unterschiedlichen Perspektiven den Umrichter,
- Fig. 9: perspektivisch eine Hilfsleiste,
- Fig. 10: die Befestigung des Elektromotors an dem Umrichter
- Fig. 11, 12: jeweils perspektivisch den Elektromotor,
- Fig. 13: perspektivisch ein Gehäuse des Umrichters,
- Fig. 14, 15: jeweils perspektivisch eine Elektronik des Umrichters,
- Fig. 16: in einer Schnittdarstellung die Befestigung der Elektronik an dem Gehäuse,
- Fig. 17: in einer Schnittdarstellung entlang der Längsachse den Umrichter
- Fig. 18: perspektivisch in einer Rückansicht den Umrichter,
- Fig. 19: perspektivisch in einer Rückansicht den Umrichter mit einem montierten Deckel,
- Fig. 20: perspektivisch zwei Zugentlastungsbaugruppen,
- Fig. 21 - 23: jeweils die Zugentlastungsbaugruppen, wobei einzelne Komponenten weggelassen sind, und
- Fig. 24: in einer weiteren Perspektive die Zugentlastungsbaugruppen.

Einander entsprechende Teile sind in allen Figuren mit den gleichen Bezugszeichen versehen.

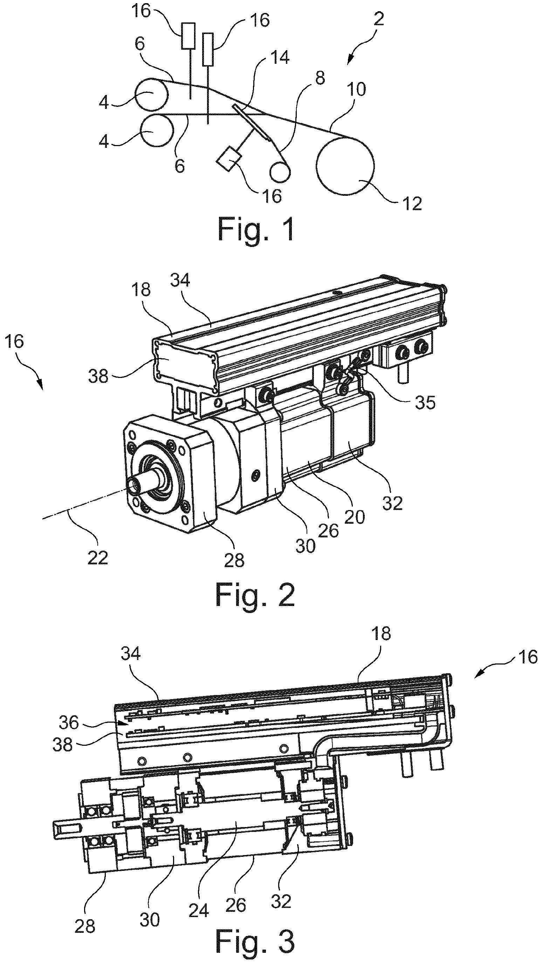

In Figur 1 ist schematisch vereinfacht eine Webmaschine 2 in Form einer Einphasenwebmaschine gezeigt. Die Webmaschine 2 weist mehrere Rollen 4, auch als Spindel bezeichnet, auf, auf die einzelne Kettfäden 6 gewickelt sind. Die Kettfäden 6 werden mittels eines Schussfadens 8 zu einem Flächengebilde 10 verwoben, das auf eine Trommel 12 aufgewickelt wird. Die Trommel 12 ist hierbei mittels eines nicht näher dargestellten Hauptantriebs angetrieben. Die Kettfäden 6 sowie eine den Schussfaden 8 führende Nadel 14 werden jeweils mittels eines Antriebs 16, die somit Hilfsantriebe sind, bewegt, sodass das Flächengebilde 10 erstellt wird. In einer nicht näher dargestellten Variante ist die Webmaschine 2 eine Mehrphasenwebmaschine ausgestaltet, und die Trommel 12 sowie die weiteren Ausgestaltungen sind entsprechend der Mehrphasenwebmaschine abgeändert.

In Figur 2 ist perspektivisch einer der Antriebe 16 dargestellt. Jeder Antrieb 16 weist einen Umrichter 18 sowie einen daran befestigten Elektromotor 20 auf, der einen um eine Rotationsachse 22 drehbar gelagerten Rotor 24 umfasst, der in einem Motorgehäuse 26 des Elektromotors 20 angeordnet ist. In Figur 3 ist der Antrieb 16 in einer Schnittdarstellung entlang der Rotationsachse 22 dargestellt. Mittels des Rotors 24 ist ein Adapter 28 des Antriebs 16 angetrieben, der an einem A-seitigen Lagerschild 30 des Elektromotors 20 befestigt ist. Mittels des A-seitigen Lagerschildes 30 ist das Motorgehäuse 26 an einem Ende in einer Richtung parallel zur Rotationsachse 22 verschlossen. Auf der gegenüberliegenden Seite ist das Motorgehäuse 26 mittels eines B-seitigen Lagerschilds 32 verschlossen, sodass sich der Rotor 24 in der Richtung parallel zur Rotationsachse 22 zwischen den beiden Lagerschilden 30, 32 befindet. Die beiden Lagerschilde 30, 32 sind jeweils Aluminiumdruckgussteile.

Der Umrichter 18 weist ein Gehäuse 34 auf, das eine Hohlprofilleiste ist und aus einem Aluminium gefertigt ist. Das Gehäuse 34 weist somit eine im Wesentlichen hohlzylindrische Form auf. Das Gehäuse 34 ist parallel zur Rotationsachse 22 angeordnet und senkrecht hierzu bezüglich des Elektromotors 20 versetzt. Das Motorgehäuse 26 ist über das B-seitige Lagerschild 32 und ein Massekabel 35 elektrisch mit dem Gehäuse 34 des Umrichters 18 verbunden, sodass diese das gleiche elektrische Potential aufweisen. Das Massekabel 35 ist außenseitig an dem B-seitigen Lagerschilds 32 sowie dem Gehäuse 34 lösbar befestigt, nämlich mittels Schrauben. Somit ist ein nachträgliches Montieren sowie Lösen des Massekabels 35 auch nach Montage des Antriebs 16 ermöglicht.

Innerhalb des Gehäuses 34 ist eine Elektronik 36 angeordnet, mittels derer eine Bestromung des Elektromotors 20 erfolgt. Die Elektronik 36 teilweise ist mittels eines Vergusses 38 umgeben und somit in dem Gehäuse 34 gehalten. Der Verguss 38 ist ein Polyurethan. In diesem Beispiel ist das Gehäuse 34 auf Seiten des A- seitigen Lagerschilds 30 nicht verschlossen, sodass der ausgehärtete Verguss 38 sichtbar ist.

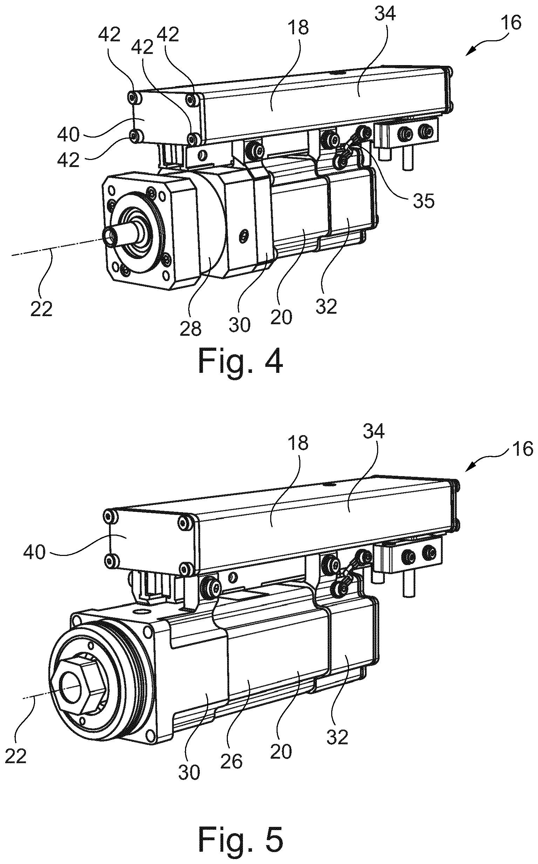

In Figur 4 ist eine Abwandlung des Antriebs 16 dargestellt, wobei der Elektromotor 20 nicht verändert ist. Auch ist wiederum der Adapter 28 vorhanden. Bei dem Umrichter 18 hingegen sind die äußeren Seiten des Gehäuses 34 abgeflacht, sodass diese nun glatt ausgestaltet sind. Auch ist das Gehäuse 34 auf Seiten des A-seitigen Lagerschilds 30 mittels eines Deckels 40 verschlossen, der mittels mehrerer Schrauben 42 an das Gehäuse 34 angeschraubt ist. Somit wird ein Austritt des Vergusses 38 aus dem Gehäuse 34 bei Fertigung vermieden. Auch ist eine Robustheit erhöht.

In Figur 5 ist eine weitere Abwandlung des Antriebs 16 gezeigt, wobei der Umrichter 18 der in Figur 4 dargestellten Variante entspricht und somit den Deckel 40 aufweist. Jedoch ist der Elektromotor 20 verändert. Es ist nämlich das Motorgehäuse 26 sowie der darin liegende Rotor 24 verlängert, weswegen das A-seitige Lagerschild 30 von dem B-seitigen Lagerschild 32 in der Richtung parallel zur Rotationsachse 22 einen vergrößerten Abstand aufweist. Mit anderen Worten weist der Elektromotor 20 eine vergrößerte Ausdehnung auf. Auch dieser Elektromotor 20 ist an dem Umrichter 18 befestigt. Somit sind mehrere Montagepositionen zur Befestigung des Elektromotors 20 an dem Umrichter 18 vorhanden, sodass unterschiedliche Ausprägungen des Elektromotors 20 an jeweils dem gleichen Umrichter 18 montiert werden können. Hierbei ist eine Anpassung des Umrichters 18 nicht erforderlich. Bei dem verlängerten Elektromotor 20 ist eine Anbringung des Adapters 28 nicht erforderlich, da der Elektromotor 20 bereits den vergrößerten Überstand über den Umrichter 18 aufweist, sodass eine Anbindung des mittels des Antriebs 16 angetriebenen Bauteils vereinfacht ist. In der nicht näher dargestellten Variante ist der in Figur 5 gezeigt Elektromotor 20 mit dem in Figur 2 gezeigten Umrichter 18 kombiniert und weist somit den Deckel 40 nicht auf.

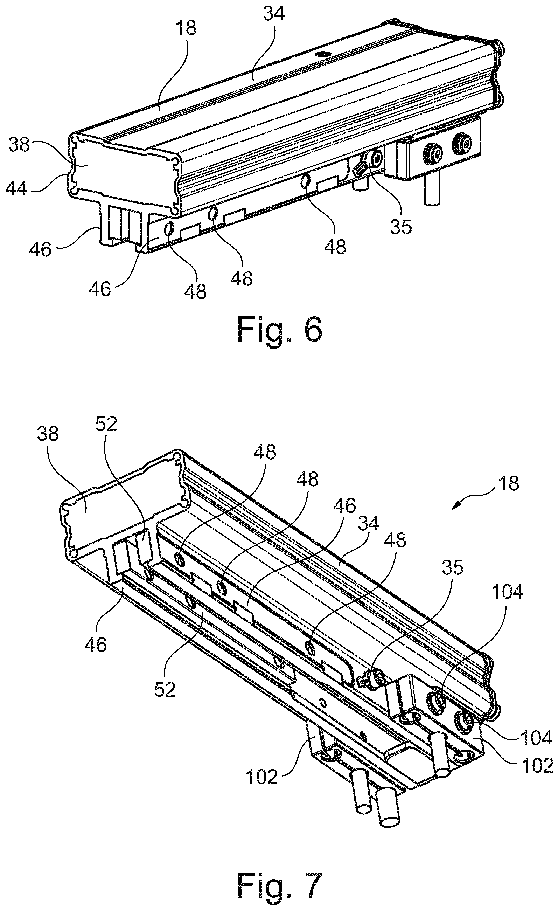

In Figur 6 und Figur 7 ist aus unterschiedlichen Perspektiven der Umrichtern 18 gemäß Figur 2 gezeigt, der das Gehäuse 34 aufweist. Das Gehäuse 34 umfasst einen hohlzylindrischen Grundkörper 44, an dem zwei Leisten 46 angeformt sind, die parallel zur Rotationsachse 22 und somit auch zu dem Elektromotor 20 verlaufen. Die Leisten 46 sind in Richtung des Elektromotors 20 gerichtet. An einer der Leisten 46 ist das Massekabel 35, das hier ausschnittsweise gezeigt ist, angeschraubt.

Jede der Leisten 46 weist drei glatte Durchgangslöcher 48 auf, wobei die Durchgangslöcher 48 der beiden Leisten 46 zueinander deckungsgleich sind. Die Durchgangslöcher 48 weisen zueinander unterschiedliche Abstände auf, wobei der Abstand von je zwei der Durchgangslöcher 48 auf den Abstand des A-seitigen Lagerschilds 30 zu dem B-seitigen Lagerschilds 32 der beiden unterschiedlichen Ausgestaltungsformen des Elektromotors 20 abgestimmt sind. Somit werden mittels der Position der Durchgangslöcher 48 die beiden Montagepositionen definiert.

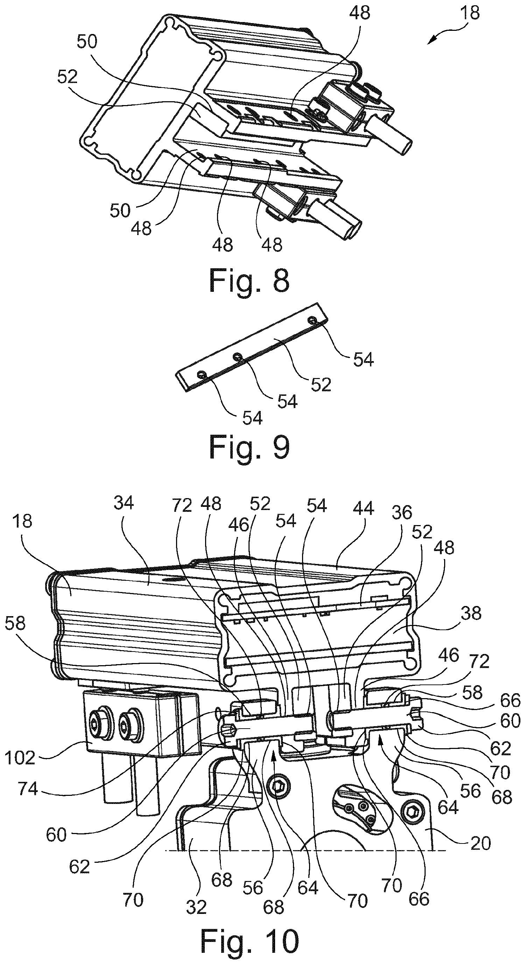

Die beiden Leisten 46 weisen an den aufeinander zu gerichteten Seiten eine Aufnahme 50 auf, innerhalb derer eine Hilfsleiste 52 angeordnet ist. In Figur 8 ist der Umrichter 18 mit lediglich einer der Hilfsleisten 52 perspektivisch gezeigt, und in Figur 9 ist eine der zueinaner baugleichen Hilfsleisten 52 perspektivisch gezeigt. Die Hilfsleiste 52 ist aus einem Stahl erstellt, und weist drei Schraublöcher 54 auf von denen jedes im Montagezustand, also dann, wenn die Hilfsleiste 52 in der jeweiligen Aufnahme 50 einliegt, deckungsgleich mit jeweils einem der Durchgangslöcher 48 ist. Jedes Schraubloch 54 weist ein Innengewinde auf.

In Figur 10 ist in einer Schnittdarstellung senkrecht zur Rotationsachse 22 die Befestigung des Elektromotors 20 an dem Umrichter 18 dargestellt, wofür jeweils eines der Durchgangslöcher 48 jeder Leisten 46 und das zugeordnete Schraubloch 54 der jeweiligen Hilfsleiste 52 verwendet wird. Hierbei ist die Befestigung des B-seitigen Lagerschilds 32 an dem Umrichter 18 gezeigt. Das A-seitige Lagerschild 30 wird in gleicher Weise an dem Umrichter 18 befestigt, wobei hierfür abweichende Durchgangslöcher 48 sowie entsprechende Schraublöcher 54 verwendet werden. Die gewählten Durchgangslöcher 48 sowie Schraublöcher 54 sind dabei auf den jeweiligen Elektromotor 20 angepasst.

Das B-seitigen Lagerschild 32 weist zwei Laschen 56 auf, mittels derer die beiden Leisten 46 umgriffen sind. Mit anderen Worten sind die Leisten 46 zwischen den beiden Laschen 56 angeordnet. Jede Lasche 56 weist eine Montageloch 58 auf, das deckungsgleich zu dem verwendeten Durchgangsloch 48 der zugeordneten Leiste 46 angeordnet ist. Durch jedes Montageloch 58 ist jeweils eine Montageschraube 60 gesteckt und durch das zugeordnete Durchgangsloch 48 geführt sowie in das korrespondierende Schraubloch 54 endseitig eingeschraubt. Somit sind die Leisten 46 mittels der Montageschrauben 60 mit den Laschen 56 des Elektromotors 20 verschraubt. Die Montageschrauben 60 weisen hierbei jeweils einen Kopf 62 auf, die sich jeweils auf der den Leisten 46 gegenüberliegenden Seite der Laschen 56 befinden. Auch liegen die Montageschrauben 60 endseitig an der jeweiligen Leiste 46 an. Somit ist ein nachträgliches Lösen der Montageschrauben 60 auch nach Abschluss der Montage ermöglicht.

Jedes Montageloch 58 ist mittels einer Buchse 64 aus einem Polytetrafluorethylen ausgekleidet. Jede Buchse 64 weist zwei zueinander baugleiche Teile 66 auf, die jeweils einen sich in dem Montageloch 58 befindenden Hohlzylinder 68 aufweisen, an dem ein jeweiliger Kragen 70 angeformt ist, der radial übersteht und sich somit außerhalb des Montagelochs 58 befindet. Somit wird mittels des Kragens 70 ein Einschieben des Hohlzylinders 68 in das jeweilige Montageloch 58 begrenzt, wobei die beiden Teile 66 von unterschiedlichen Seiten in das Montageloch eingesteckt werden. Zwischen diesen befindet sich hierbei ein Spalt 72, sodass die beiden Teile 66 nicht direkt aneinander anliegen. Hierbei ist der Kragen 70 des einen Teils 66 jeder der Buchsen 64 zwischen der Lasche 56 und der zugeordneten Leiste 46 angeordnet, sodass die Leiste 46 in keinem mechanisch direkten Kontakt mit der jeweiligen Lasche 56 ist. Mittels der Hohlzylinder 68 wird die Montageschraube 60 umfangsseitig umgeben, und der Kopf 62 der Montageschrauben 60 liegt über einen Unterlegscheibe 74, die aus einem Metall gefertigt ist, an dem Kragen 70 des verbleibenden Teils 66 an. Somit ist auch jede Montageschraube 60 mittels der Buchsen 64 mechanisch von der Lasche 56 getrennt. Folglich sind das Gehäuse 34 und der Elektromotor 20 mittels der Buchsen 64 thermisch entkoppelt, und ein Energieeintrag von dem Elektromotor 20 in den Umrichter 18 sowie umgekehrt ist vermieden.

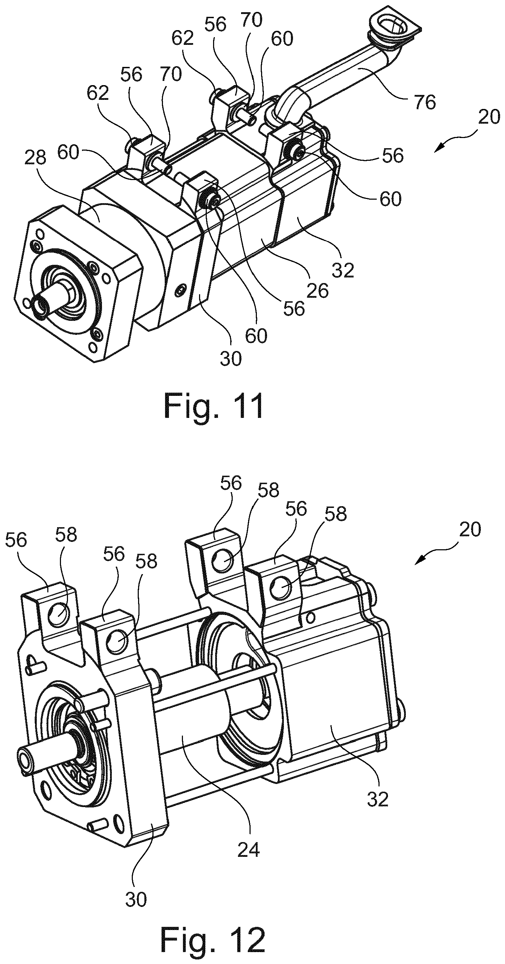

In Figur 11 ist perspektivisch der Elektromotor 20 von dem Umrichter 18 her und in Figur 12 mit weggelassenem Motorgehäuse 26 gezeigt. Die Laschen 56 sind jeweils ein Bestandteil eines der beiden Lagerschilde 30, 32 und einstückig mit weiteren Bestandteilen des jeweiligen Lagerschildes 30, 32. Durch das B-seitige Lagerschild 32 ist ferner ein Schlauch 76 geführt, innerhalb dessen elektrische Leitung angeordnet sind, mittels derer eine Bestromung der nicht näher dargestellten Elektromagneten des Elektromotors 20 durch die Elektronik 34 erfolgt. Der Schlauch 76 ist dabei aus einem Gummi gefertigt.

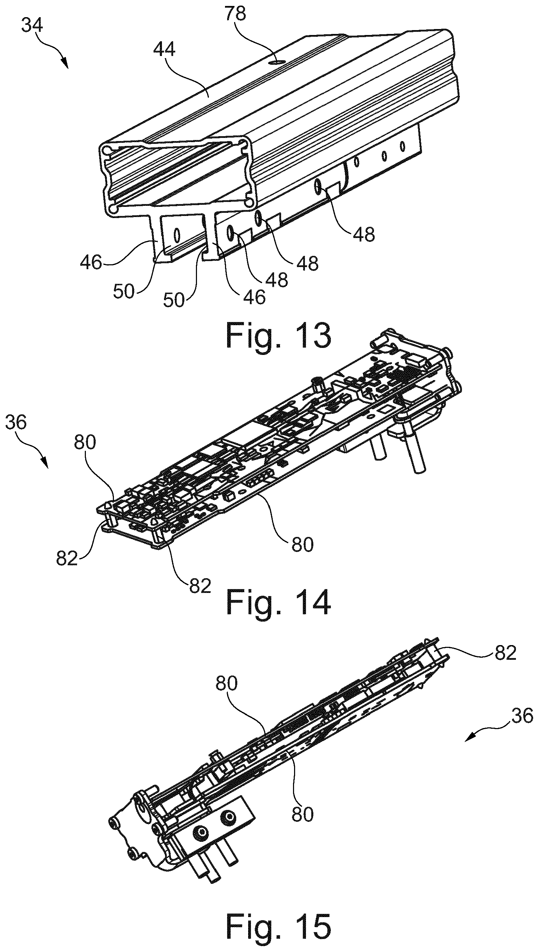

In Figur 13 ist perspektivisch das Gehäuse 34 des Umrichters 18 gezeigt. Das Gehäuse 34, das den Grundkörper 44 sowie die beiden daran angeformten Leisten 46 aufweist, ist eine Hohlprofilleiste, die aus einem Strangpressprofil mittels Ablängens erstellt wurde. Die Durchgangslöcher 48 sowie die Aufnahme 50 werden nach dem Ablängen mittels Abtragen von Material erstellt. Auf der den Leisten 46 gegenüberliegenden Seite des Grundkörpers 44 ist in diesen ein Befestigungsloch 78 eingebracht, und der Grundkörper 44 weist innen sowie außen einen rechteckförmigen Querschnitt senkrecht zur Rotationsachse 22 auf, wobei die Ecken abgerundet sowie nach außen gewölbt sind. Somit ist im Wesentlichen ein knochenförmiger Querschnitt bereitgestellt.

In Figur 14 und 15 ist jeweils die Elektronik 36 gezeigt, die zwei Leiterplatten 80 umfasst, die aufeinandergestapelt, jedoch zueinander beabstandet sind. Die beiden Leiterplatten 80 sind mittels zweier Dome 82 zueinander beabstandet und aneinander befestigt, die sich an einem Ende der sich parallel zur Rotationsachse 20 erstreckenden Leiterplatten 80 befinden. An den Leiterplatten 80 sind unterschiedliche elektrische sowie elektronische Bauteile befestigt, mittels derer eine geeignete Schaltung realisiert ist. So weist eine der Leiterplatten 80 eine Brückenschaltung auf, mittels derer die nicht näher dargestellten Elektromagneten des Elektromotors 20 bestromt werden. An der weiteren Leiterplatte 80 ist die Treiberschaltung für die Brückenschaltung angebunden. An der die Brückenschaltung aufweisenden Leiterplatte 80 liegt bei Betrieb eine elektrische Spannung von 56 V an.

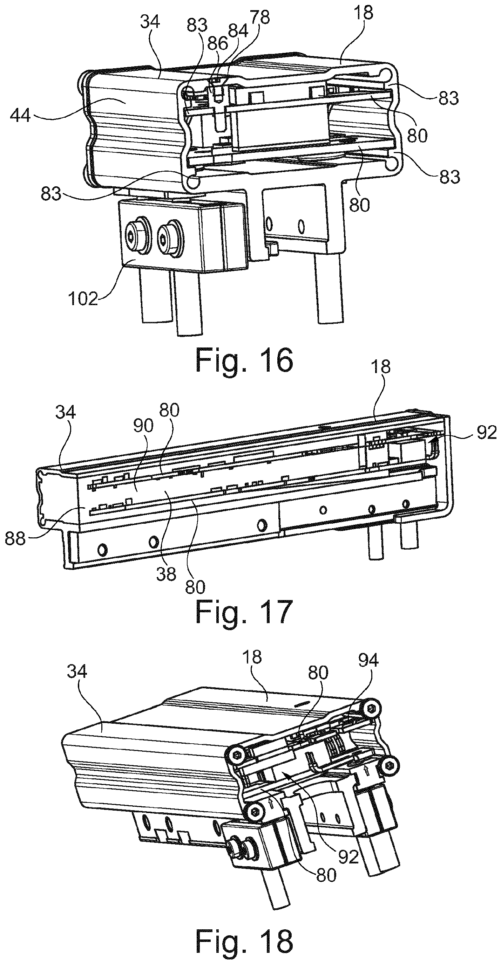

In Figur 16 ist in einer Schnittdarstellung senkrecht zur Rotationsachse 22 und in Figur 17 parallel zur Rotationsachse 22 der Umrichter 18 gezeigt. Die beiden Leiterplatten 80, die mittels der Dome 82 aneinander befestigt sind, werden zur Montage in die in Figur 13 gezeigte Gehäuse 34 eingeschoben. Da die beiden Leiterplatten 80 aneinander befestigt, ist ein Einschieben erleichtert. Auch liegen die Leiterplatten 80 zumindest teilweise an entsprechenden Vorsprüngen 83 des Grundkörpers 44 an, die nach innen weisen. Eine der beiden Leiterplatten 80 wird mittels eines Befestigungsmittels 84 in Form einer Schraube an dem Gehäuse 34 befestigt. Hierfür wird das Befestigungsmittel 84 durch das Befestigungsloch 78 zumindest teilweise eingeführt und in ein entsprechendes Halteelement 86 eingedreht, das an dieser Leiterplatten 80 befestigt ist. Somit ist die Position beider Leiterplatten 80 innerhalb des Gehäuses 34 vorgegeben. Anschließend wird der Verguss 38 in das Gehäuse 34 eingefüllt und somit die Elektronik 36 teilweise umgeben.

Bei einer Abwandlung hiervon wird zunächst ein Teil des Vergusses 38 in das Gehäuse 34 eingefüllt und ausgehärtet, sodass ein erster Teil 88 gebildet ist, mittels dessen das Gehäuse 34 endseitig verschlossen ist. Auf dieses wird die Elektronik 36, also die Leiterplatten 80, aufgesetzt, und anschließend wird der verbleibende Verguss 38 in das Gehäuse 34 eingefüllt, wobei mittels des ersten Teils 88 ein Austritt aus dem Gehäuse 34 vermieden ist. Dieser Teil des Vergusses 38 wird ebenfalls ausgehärtet, sodass der Verguss 38 auch einen zweiten Teil 90 umfasst, in den die Elektronik 36 eingebettet ist.

Unabhängig von der Art des Einfüllens des Vergusses 38 ragt ein Freiende 92 der Elektronik 36 aus dem Verguss 38 heraus und ist somit nicht von diesem überzogen. An diesem werden, wie auch in Figur 18 ersichtlich, elektrische Leitungen angeschlossen, die durch den Schlauch 76 zur Bestromung des Elektromotors 20 geführt sind.

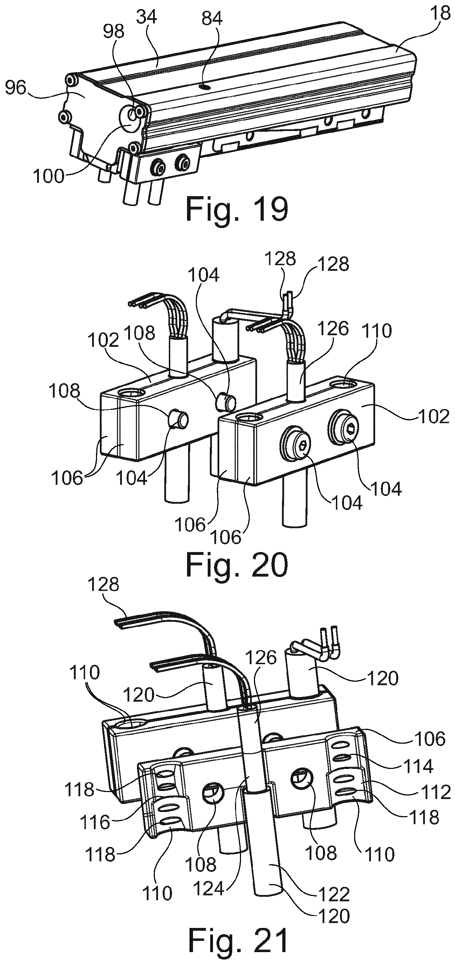

An einer der Leiterplatten 80 ist eine Statusanzeige 94 in Form einer LED angebunden, wobei die Statusanzeige 94 sich bei dem Freiende 92 befindet. Im Montagezustand ist das dem Freiende 92 zugeordnete Ende des Gehäuses 34 mittels eines weiteren Deckels 96 verschlossen, wie in Figur 19 gezeigt. Der weitere Deckel 96 ist an dem Gehäuse 34 festgeschraubt und weist eine Sichtöffnung 98 auf. Die Sichtöffnung 98 ist mittels einer durchsichtigen Folie 100 abgedeckt, sodass ein Eindringen von Fremdpartikeln durch die Sichtöffnung 98 vermieden ist. Durch die Sichtöffnung 98 kann jedoch die Statusanzeige 94 von einem Benutzer wahrgenommen werden. Mittels der Statusanzeige 94 wird insbesondere eine Betriebsbereitschaft des Umrichters 18 signalisiert und/oder eine Datenübertragung über eine nicht näher dargestellte Schnittstelle.

Der Antrieb 16 umfasst ferner zwei Zugentlastungsbaugruppen 102, die in Figur 20 perspektivisch gezeigt sind. Jede der beiden Zugentlastungsbaugruppen 102 ist an jeweils einer der Leisten 46 mittels zweier Schrauben 104 festgeschraubt, wie in Figur 7 perspektivisch gezeigt. Somit sind die Zugentlastungsbaugruppen 102 außenseitig an dem Gehäuse 34 befestigt.

Jede Zugentlastungsbaugruppe 102 weist zwei zueinander baugleiche Platten 106 auf, die jeweils zwei Löcher 108 umfassen, durch die die jeweilige Schrauben 104 geführt sind. Mittels Anziehen der Schrauben 104 werden die beiden Platten 106 jeder Zugentlastungsbaugruppe 102 aufeinander gepresst. Somit sind auch die beiden Platten 106 mittels der Schrauben 104 aneinander befestigt.

Die beiden Platten 106 jeder Zugentlastungsbaugruppe 102 sind aus Aluminium gefertigt und zueinander baugleich oder spiegelbildlich aufgebaut, wie in den Figuren 21-23 gezeigt, bei denen unterschiedliche Bestandteile weggelassen sind. Jede der Platten 106 weist drei Aussparungen 110 auf, die jeweils einen ersten Bereich 112 sowie einen zweiten Bereich 114 aufweisen. Wie beiden Bereiche 112, 114 sind mittels einer Stufe 116 zueinander getrennt und gehen über die Stufe 116 ineinander über.

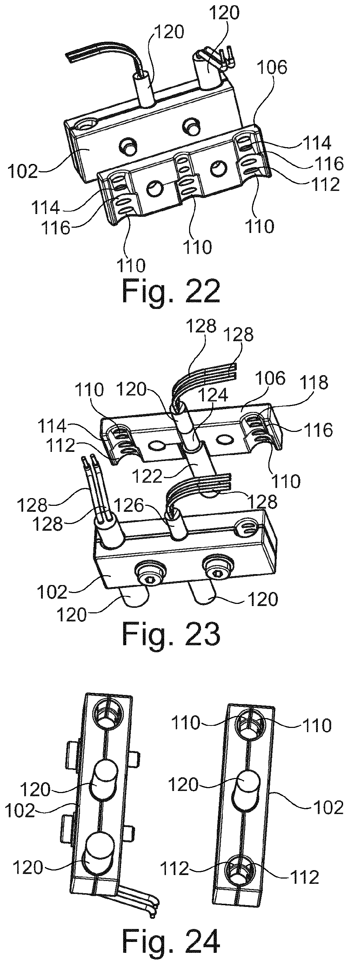

Der Querschnitt der beiden Bereiche 112, 114 ist halbkreisförmig, und der Durchmesser des ersten Bereichs 112 ist vergrößert. Bei Aneinanderfügen der beiden Platten 106 jeder Zugentlastungsbaugruppe 102 wird mittels der beiden Bereiche 112, 114 jeweils ein Zylinder gebildet, wie in Figur 23 gezeigt.

Jeden der Bereiche 112, 114 weist nach innen gerichtete Rippen 118 auf, mittels derer ein sicherer Halt eines Kabels 120 geleistet wird, sofern dieses in die entsprechenden Aussparungen 110 eingelegt wird. In dem Beispiel sind drei derartige Kabel 120 vorhanden. Zwei der drei Kabeln 120 dienen der Versorgung der Brückenschaltung mit einer elektrischen Gleichspannung, und eines der Kabel 120 dient der signaltechnischen Anbindung des Umrichters 18 an eine nicht näher dargestellte Prozesssteuerung.

Die Kabel 120 sind gleich aufgebaut, und weisen einen Mantel 122 auf, der aus einem elektrisch isolierenden Material gefertigt ist. Mittels des Mantels 122 ist eine Abschirmschicht 124 außenseitig umgeben, die aus einer Metallfolie, wie einer Kupferfolie, gefertigt ist. Von der Abschirmschicht 124 ist eine weitere Schicht 126 umgeben, die aus einem elektrisch isolierenden Kunststoff gefertigt ist. In die weitere Schicht 126 ist eine Anzahl an Litzen 128 eingebettet. An den Litzen 128 ist im Montagezustand ein Stecker befestigt, der in einen entsprechenden Gegenpart eingesteckt ist, der an einer der Leiterplatten 80 befestigt ist, oder die Litzen 128 sind direkt mit der Leiterplatten 80 elektrisch kontaktiert.

In dem Abschnitt, in dem das Kabel 120 in dem zweiten Bereich 114 einliegt, ist der Mantel 122 entfernt, sodass die Abschirmschicht 124 mechanisch direkt an den beiden Platten 106 anliegt und somit elektrisch mit diesen kontaktiert ist. Hierbei wird die Abschirmschicht 124 mittels der Rippen 118 der zweiten Aussparungen 114 gehalten. Der Mantel 122 reicht somit bis zur Stufe 116 und liegt in dem ersten Bereich 112 ein, wobei die Rippen 118 in den Mantel 122 eindrücken. Somit wird das Kabel 120 mittels des ersten Bereichs 112 mechanisch direkt gehalten, und mittels des zweiten Bereichs 114 erfolgt eine elektrische Kontaktierung der Abschirmschicht 124. Da die Platten 106 zumindest teilweise mechanisch direkt an der zugeordneten Leiste 46 anliegen, liegen diese, auch aufgrund des Massekabels 25 bei Betrieb auf dem elektrischen Potential von Masse, weswegen eine Beeinflussung von elektromagnetischen Feldern durch die von der Abschirmschicht 124 umgebenen Litzen 128 sowie umgekehrt im Wesentlichen ausgeschlossen ist. Die Abschirmschicht 124 reicht hierbei bis zur Grenze der Platten 106, sodass aus dieser lediglich die weitere Schicht 126 herausragt. Somit ist ein ungewollter Kurzschluss oder dergleichen verhindert.

### Bezugszeichenliste

- 2: Webmaschine
- 4: Rolle
- 6: Kettfaden
- 8: Schussfaden
- 10: Flächengebilde
- 12: Trommel
- 14: Nadel
- 16: Antrieb
- 18: Umrichter
- 20: Elektromotor
- 22: Rotationsachse
- 24: Rotor
- 26: Motorgehäuse
- 28: Adapter
- 30: A-seitiges Lagerschild
- 32: B-seitiges Lagerschild
- 34: Gehäuse
- 35: Massekabel
- 36: Elektronik
- 38: Verguss
- 40: Deckel
- 42: Schraube
- 44: Grundkörper
- 46: Leiste
- 48: Durchgangsloch
- 50: Aufnahme
- 52: Hilfsleiste
- 54: Schraubloch
- 56: Lasche
- 58: Montageloch
- 60: Montageschraube
- 62: Kopf
- 64: Buchse
- 66: Teil
- 68: Hohlzylinder
- 70: Kragen
- 72: Spalt
- 74: Unterlegscheibe
- 76: Schlauch
- 78: Befestigungsloch
- 80: Leiterplatte
- 82: Dom
- 83: Vorsprung
- 84: Befestigungsmittel
- 86: Halteelement
- 88: erster Teil
- 90: zweiter Teil
- 92: Freiende
- 94: Statusanzeige
- 96: weiterer Deckel
- 98: Sichtöffnung
- 100: Folie
- 102: Zugentlastungsbaugruppe
- 104: Schraube
- 106: Platte
- 108: Loch
- 110: Aussparung
- 112: erster Bereich
- 114: zweiter Bereich
- 116: Stufe
- 118: Rippe
- 120: Kabel
- 122: Mantel
- 124: Abschirmschicht
- 126: weitere Schicht
- 128: Litze

## Patentansprüche

1. Antrieb (16) mit einem Elektromotor (20) und einem daran befestigten Umrichter (18), der ein Gehäuse (34) aufweist, innerhalb dessen eine Elektronik (36) angeordnet ist,
- wobei das Gehäuse (34) einen Grundkörper (44) umfasst, an dem zwei Leisten (46) angeformt sind, die parallel zur Rotationsachse (22) und somit auch zu dem Elektromotor (20) verlaufen, wobei die Leisten (46) in Richtung des Elektromotors (20) gerichtet sind,
- wobei der Elektromotor (20) ein A-seitiges Lagerschild (30) und ein B-seitiges Lagerschild (32) aufweist,
- wobei die beiden Leisten (46) Durchgangslöcher (48) aufweisen, wobei die Durchgangslöcher (48) der beiden Leisten (46) zueinander deckungsgleich sind und zueinander unterschiedliche Abstände aufweisen, wobei der Abstand von je zwei der Durchgangslöcher (48) auf den Abstand des A-seitigen Lagerschilds (30) zu dem B-seitigen Lagerschild (32) der unterschiedlichen Ausgestaltungsformen des Elektromotors (20) abgestimmt sind, so dass werden mittels der Position der Durchgangslöcher (48) unterschiedliche Montagepositionen definiert werden können, und
- wobei zwei Laschen (56) jedem Lagerschild (30, 32) zugeordnet sind, sodass der Elektromotor (20) mittels vier Laschen (56) an den Leisten (46) befestigt ist, wobei die Leisten (46) jeweils zwischen den beiden Laschen (56) eines der Lagerschilde (30, 32) angeordnet sind, wobei jede Lasche (56) ein Montageloch (58) aufweist, das deckungsgleich zu dem verwendeten Durchgangsloch (48) der zugeordneten Leiste (46) angeordnet ist.

2. Antrieb (16) nach Anspruch 1,
**dadurch gekennzeichnet,**
**dass** das Gehäuse (34) aus einer Hohlprofilleiste gefertigt ist.

3. Antrieb (16) nach Anspruch 1 oder 2,
**dadurch gekennzeichnet,**
**dass** das Gehäuse (34) und der Elektromotor (20) mittels einer Buchse (64) aus einem Polytetrafluorethylen thermisch entkoppelt sind.

4. Antrieb (16) nach einem der Ansprüche 1 bis 3,
**dadurch gekennzeichnet,**
**dass** die Elektronik (36) zwei zueinander beabstandete und aufeinander gestapelte Leiterplatten (80) aufweist, die aneinander befestigt sind, wobei insbesondere eine der Leiterplatten (80) mittels eines Befestigungsmittels (84) an dem Gehäuse (34) befestigt ist.

5. Antrieb (16) nach einem der Ansprüche 1 bis 4,
**dadurch gekennzeichnet,**
**dass** die Elektronik (36) in dem Gehäuse (34) teilweise vergossen ist.

6. Antrieb (16) nach Anspruch 5,
**dadurch gekennzeichnet,**
**dass** der Verguss (38) einen ersten Teil (88), auf den die Elektronik (36) aufgesetzt ist, und einen zweiten Teil (90) aufweist, in den die Elektronik (36) eingebettet ist, und/oder dass ein Freiende (92) der Elektronik (36) aus dem Verguss (38) ragt.

7. Antrieb (16) nach einem der Ansprüche 1 bis 6,
**dadurch gekennzeichnet,**
**dass** außenseitig an dem Gehäuse (34) eine Zugentlastungsbaugruppe (102) angebunden ist, mittels derer ein Kabel (120) gehalten ist.

8. Antrieb (16) nach Anspruch 7,
**dadurch gekennzeichnet,**
**dass** die Zugentlastungsbaugruppe (102) zwei aneinander befestigte Platten (106) umfasst, die jeweils eine Aussparung (110) aufweisen, innerhalb derer das Kabel (120) einliegt.

9. Antrieb (16) nach Anspruch 8,
**dadurch gekennzeichnet,**
**dass** jede Aussparung (110) mittels einer Stufe (116) in einen ersten Bereich (112) mit einem vergrößerten Durchmesser und einen zweiten Bereich (114) unterteilt ist, und dass das Kabel (120) einen an dem ersten Bereich (112) anliegenden und bis zu der Stufe (116) reichenden Mantel (122) und darunter eine Abschirmschicht (124) umfasst, die an dem zweiten Bereich (114) anliegt.

## Claims

1. Drive (16) having an electric motor (20) and having a converter (18) which is fastened thereto and has a housing (34) within which electronics (36) are arranged,
- wherein the housing (34) comprises a main body (44) on which there are formed integrally two strips (46) that extend parallel to the axis of rotation (22) and thus also to the electric motor (20), wherein the strips (46) are directed in the direction of the electric motor (20),
- wherein the electric motor (20) has an A-side bearing plate (30) and a B-side bearing plate (32),
- wherein the two strips (46) have passage holes (48), wherein the passage holes (48) of the two strips (46) are congruent in relation to one another and are at different distances from one another, wherein the distance between a respective two of the passage holes (48) is matched to the distance between the A-side bearing plate (30) and the B-side bearing plate (32) of the different embodiments of the electric motor (20), so that different mounting positions can be defined by means of the position of the passage holes (48), and
- wherein two tabs (56) are assigned to each bearing plate (30, 32) so that the electric motor (20) is fastened to the strips (46) by means of four tabs (56), wherein the strips (46) are each arranged between the two tabs (56) of one of the bearing plates (30, 32), wherein each tab (56) has a mounting hole (58) which is arranged so as to be congruent in relation to the used passage hole (48) of the assigned strip (46).

2. Drive (16) according to Claim 1,
**characterized in that** the housing (34) is manufactured from a hollow profile strip.

3. Drive (16) according to Claim 1 or 2,
**characterized in that** the housing (34) and the electric motor (20) are decoupled thermally by means of a bushing (64) composed of a polytetrafluoroethylene.

4. Drive (16) according to one of Claims 1 to 3,
**characterized in that** the electronics (36) have two printed circuit boards (80) which are spaced apart from one another, which are stacked one on top of the other and which are fastened to one another, wherein in particular one of the printed circuit boards (80) is fastened to the housing (34) by means of a fastening means (84).

5. Drive (16) according to one of Claims 1 to 4,
**characterized in that** the electronics (36) are partially potted in the housing (34).

6. Drive (16) according to Claim 5,
**characterized in that** the potting compound (38) has a first part (88), onto which the electronics (36) are placed, and a second part (90), into which the electronics (36) are embedded, and/or **in that** a free end (92) of the electronics (36) protrudes from the potting compound (38).

7. Drive (16) according to one of Claims 1 to 6,
**characterized in that** a strain-relief assembly (102), by means of which a cable (120) is held, is attached to the outside of the housing (34).

8. Drive (16) according to Claim 7,
**characterized in that** the strain-relief assembly (102) comprises two plates (106) which are fastened to one another and each have a recess (110) within which the cable (120) is situated.

9. Drive (16) according to Claim 8,
**characterized in that** each recess (110) is subdivided by means of a step (116) into a first region (112), with an increased diameter, and a second region (114), and **in that** the cable (120) comprises a sheath (122), which bears against the first region (112) and extends as far as the step (116), and, underneath said sheath, a shielding layer (124), which bears against the second region (114).

## Revendications

1. Entraînement (16) avec un moteur électrique (20) et un inverseur (18) fixé à celui-ci, qui présente un boîtier (34) à l'intérieur duquel est agencée une électronique (36),
- le boîtier (34) comprenant un corps de base (44) sur lequel sont formées deux baguettes (46) qui s'étendent parallèlement à l'axe de rotation (22) et donc également au moteur électrique (20), les baguettes (46) étant orientées en direction du moteur électrique (20),
- le moteur électrique (20) présentant un flasque côté A (30) et un flasque côté B (32),
- les deux baguettes (46) présentant des trous de passage (48), les trous de passage (48) des deux baguettes (46) étant identiques entre eux et présentant des distances différentes, la distance de deux des trous de passage (48) étant adaptée à la distance entre le flasque côté A (30) et le flasque côté B (32) des différentes formes de réalisation du moteur électrique (20), de telle sorte que différentes positions de montage peuvent être définies au moyen de la position des trous de passage (48), et
- deux pattes (56) étant associées à chaque flasque (30, 32), de telle sorte que le moteur électrique (20) est fixé aux baguettes (46) au moyen de quatre pattes (56), les baguettes (46) étant respectivement agencées entre les deux pattes (56) de l'un des flasques (30, 32), chaque patte (56) présentant un trou de montage (58) qui est agencé de manière à coïncider avec le trou de passage (48) utilisé de la baguette (46) associée.

2. Entraînement (16) selon la revendication 1, **caractérisé en ce que** le boîtier (34) est fabriqué à partir d'une baguette profilée creuse.

3. Entraînement (16) selon la revendication 1 ou 2, **caractérisé en ce que** le boîtier (34) et le moteur électrique (20) sont découplés thermiquement au moyen d'une douille (64) en polytétrafluoroéthylène.

4. Entraînement (16) selon l'une quelconque des revendications 1 à 3, **caractérisé en ce que** l'électronique (36) présente deux cartes de circuit imprimé (80) espacées l'une de l'autre et empilées l'une sur l'autre, qui sont fixées l'une à l'autre, notamment l'une des cartes de circuit imprimé (80) étant fixée au boîtier (34) au moyen d'un moyen de fixation (84).

5. Entraînement (16) selon l'une quelconque des revendications 1 à 4, **caractérisé en ce que** l'électronique (36) est partiellement scellée dans le boîtier (34).

6. Entraînement (16) selon la revendication 5, **caractérisé en ce que** le scellement (38) présente une première partie (88) sur laquelle est placée l'électronique (36) et une deuxième partie (90) dans laquelle est incorporée l'électronique (36), et/ou **en ce qu'**une extrémité libre (92) de l'électronique (36) fait saillie hors du scellement (38).

7. Entraînement (16) selon l'une quelconque des revendications 1 à 6, **caractérisé en ce qu'**un ensemble de décharge de traction (102) est attaché sur le côté extérieur du boîtier (34), au moyen duquel un câble (120) est maintenu.

8. Entraînement (16) selon la revendication 7, **caractérisé en ce que** l'ensemble de décharge de traction (102) comprend deux plaques (106) fixées l'une à l'autre, qui présentent chacune un évidement (110) à l'intérieur duquel se trouve le câble (120).

9. Entraînement (16) selon la revendication 8, **caractérisé en ce que** chaque évidement (110) est divisé au moyen d'un gradin (116) en une première zone (112) de diamètre agrandi et une deuxième zone (114), et **en ce que** le câble (120) comprend une gaine (122) adjacente à la première zone (112) et s'étendant jusqu'au gradin (116) et, en dessous, une couche de blindage (124) qui est adjacente à la deuxième zone (114).
